# EUROPÄISCHE PATENTSCHRIFT

(11) **EP 0 958 955 B1**
(45) Veröffentlichungstag und Bekanntmachung des Hinweises auf die Patenterteilung: **27.10.2004**
(21) Anmeldenummer: 99107785.0
(22) Anmeldetag: 20.04.1999
(51) Int. Cl.: B60J 7/20

(54) **Kraftfahrzeug mit einem in einem Verdeckkasten ablegbaren Verdeck**
Automotive vehicle with convertible top storable in a convertible top storage compartment
Véhicule automobile avec une capote escamotable dans un compartiment de stockage

(30) Priorität: 19.05.1998 DE 29809007 U
(43) Veröffentlichungstag der Anmeldung: 24.11.1999
(73) Patentinhaber: Wilhelm Karmann GmbH, D-49084 Osnabrück (DE)
(72) Erfinder: Bokern, Dieter, 49393 Lohne (DE); Schramm, Holger, 49143 Bissendorf (DE); Hesker, Norbert, 48231 Warendorf (DE); Selle, Heinrich, 32549 Bad Oeynhausen (DE)
(74) Vertreter: Busse & Busse Patentanwälte

(56) Entgegenhaltungen:
- EP-A- 0 860 312
- DE-C- 19 541 168
- DE-C- 19 542 906
- DE-U- 29 608 251
- DE-U- 29 623 192

## Beschreibung

Die Erfindung bezieht sich auf ein Kraftfahrzeug mit einem gegenüber dem Kofferraum durch eine variable Trennvorrichtung abgeteilten Verdeckkasten nach dem Oberbegriff des Anspruches 1.

Die DE 195 41 168 C1 zeigt eine Trennvorrichtung, die drei plattenförmige, miteinander über scharnierartige Schwenkachsen verbundene Elemente umfaßt. Eine derartige Vorrichtung weist ein hohes Gewicht auf, zudem müssen die Plattenelemente durch Eingriff in den Kofferraum aus der Stellung maximaler Vergrößerung des Verdeckkastens in die Stellung einer maximalen Vergrößerung des Kofferraums überführt werden, was hinsichtlich der Handhabung kompliziert ist. Dabei besteht die Gefahr, daß in dem Scharnier zwischen den plattenförmigen Elementen die Finger eines Benutzers eingeklemmt werden. Die plattenförmigen Elemente benötigen auch in Gepäckaufbewahrungsstellung relativ viel Raum, der damit zur Benutzung verloren geht.

Die DE 44 45 920 C2 zeigt ein ausziehbares Rollo, das nur in Verdeckaufnahmestellung als Trennvorrichtung dient und in Gepäckaufnahmestellung eingefahren ist. Hierfür ist jedoch ein großer Rollokasten oder dergleichen an der vorderen Begrenzungswand des Kofferraums vorzusehen, so daß ebenfalls ein erheblicher Raumverlust eintritt. Auch ist der Rollokasten durch sich bewegende Gepäckstücke leicht zu beschädigen. Auch hier ist die Bedienung relativ umständlich und manuell durch den Kofferraum hindurch vorzunehmen.

Der Erfindung liegt das Problem zugrunde, eine raumsparende, flexible und leicht und komfortabel zu bedienende Trennvorrichtung zu schaffen.

Die Erfindung löst dieses Problem mit den Merkmalen des Anspruches 1. Hinsichtlich weiterer vorteilhafter Ausgestaltungen wird auf die Ansprüche 2 bis 13 verwiesen.

Durch die erfindungsgemäße Ausbildung ist eine Abteilung zwischen dem Kofferraum und dem Verdeckkasten sowohl in einer Verdeckaufnahmestellung, in der der Verdeckkasten um einen Zusatzraum vergrößert ist, als auch in einer Gepäckaufnahmestellung, in der der Zusatzraum dem Kofferraum zugeordnet ist, erreicht. Die textile Bespannung nimmt einen Minimum an Raum ein, erlaubt zudem eine hohe Flexibilität, da ein Ausdehnen bzw. Ausbeulen einer derartigen Bespannung problemlos möglich ist. Dadurch, daß die an seitlichen Rahmenteilen gehaltene textile Bespannung durch vertikale Verschiebung zu verstellen ist, ist die Betätigung vereinfacht. Besonders vorteilhaft kann ein Antriebselement vorgesehen sein, um diese Verschiebung zu ermöglichen. Vorteilhaft ist das Antriebselement an die Verdeck- bzw. Verdeckkastenbetätigung gekoppelt, so daß eine gesonderte Auslösung des Antriebselements entbehrlich ist; vielmehr erfolgt diese durch die Bewegung des Verdecköffnens oder -schließens bzw. des Öffnens oder Schließens des Verdeckkastendeckels. Auch eine Fernauslösung über einen gesondert zu bedienenden Bowdenzug, beispielsweise vom Armaturenbrett aus, ist möglich.

Weitere Vorteile und Merkmale ergeben sich aus in der Zeichnung dargestellten Ausführungsbeispielen des Gegenstandes der Erfindung. In der Zeichnung zeigt:
- Fig. 1: eine schematische Seitenansicht eines erfindungsgemäßen Kraftfahrzeuges mit einer ersten Ausbildung einer Trennvorrichtung,
- Fig. 2: eine Detailansicht der Trennvorrichtung nach Fig. 1 in Verdeckaufbewahrungsstellung sowie - gestrichelt eingezeichnet - in Gepäckaufbewahrungsstellung,
- Fig. 3: eine ähnliche Ansicht wie Fig. 2 der Trennvorrichtung in Gepäckaufbewahrungsstellung,
- Fig. 4: eine ähnliche Ansicht wie Fig. 3 der Trennvorrichtung in Verdeckaufbewahrungsstellung,
- Fig. 5: eine schematische Seitenansicht eines Kraftfahrzeugs mit einer zweiten Ausführung einer Trennvorrichtung,
- Fig. 6: eine Detailansicht der Trennvorrichtung nach Fig. 5 in Verdeckaufbewahrungs- und Gepäckaufbewahrungsstellung (gestrichelt),
- Fig. 7: eine ähnliche Ansicht wie Fig. 6 der Trennvorrichtung in Gepäckaufbewahrungsstellung,
- Fig. 8: eine ähnliche Ansicht wie Fig. 7 der Trennvorrichtung in Verdeckaufbewahrungsstellung,
- Fig. 9: eine schematische Seitenansicht eines erfindungsgemäßen Kraftfahrzeuges mit einer dritten Ausbildung einer Trennvorrichtung,
- Fig. 10: eine Detailansicht der Trennvorrichtung nach Fig. 9 in Verdeckaufbewahrungs- und Gepäckaufbewahrungsstellung (gestrichelt),
- Fig. 11: eine ähnliche Ansicht wie Fig. 10 der Trennvorrichtung in Gepäckaufbewahrungsstellung,
- Fig. 12: einen Schnitt entlang der Linie XII-XII in Fig. 11,
- Fig. 13: eine ähnliche Ansicht wie Fig. 11 der Trennvorrichtung in Verdeckaufbewahrungsstellung,
- Fig. 14: eine Detailansicht der rückseitigen Festlegung der textilen Bespannung in Gepäckaufbewahrungs- und in Verdeckaufbewahrungsstellung,
- Fig. 15: eine ähnliche Ansicht wie Fig. 14 der Trennvorrichtung in Gepäckaufbewahrungsstellung,

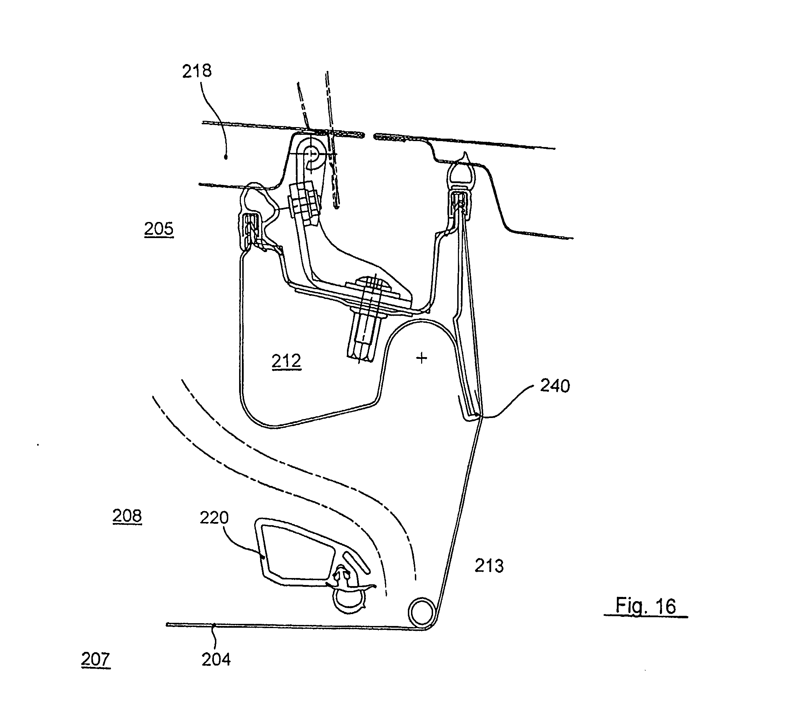

- Fig. 16: eine ähnliche Ansicht wie Fig. 15 der Trennvorrichtung in Verdeckaufbewahrungsstellung,
- Fig. 17: eine schematische Seitenansicht eines erfindungsgemäßen Kraftfahrzeuges mit einer vierten Ausführung einer Trennvorrichtung,
- Fig. 18: eine Detailansicht der Trennvorrichtung nach Fig. 17 in Verdeckaufbewahrungs- und Gepäckaufbewahrungsstellung (gestrichelt),
- Fig. 19: eine ähnliche Ansicht wie Fig. 18 der Trennvorrichtung in Gepäckaufbewahrungsstellung,
- Fig. 20: eine ähnliche Ansicht wie Fig. 19 der Trennvorrichtung in Verdeckaufbewahrungsstellung,
- Fig. 21: eine schematische Seitenansicht eines erfindungsgemäßen Kraftfahrzeuges mit einer fünften Ausführung der Trennvorrichtung,
- Fig. 22: eine Detailansicht der Trennvorrichtung nach Fig. 21 in Verdeckaufbewahrungs- und Gepäckaufbewahrungsstellung (gestrichelt),
- Fig. 23: den ersten Schritt des Übergangs aus der Gepäckaufnahme- in die Verdeckaufnahmestellung,
- Fig. 24: eine ähnliche Ansicht wie Fig. 23 in einem weiteren Teilschritt des Übergangs,
- Fig. 25: eine ähnliche Ansicht wie Fig. 24 in einem weiteren Teilschritt des Übergangs,
- Fig. 26: die Trennvorrichtung in Verdeckaufbewahrungsstellung.

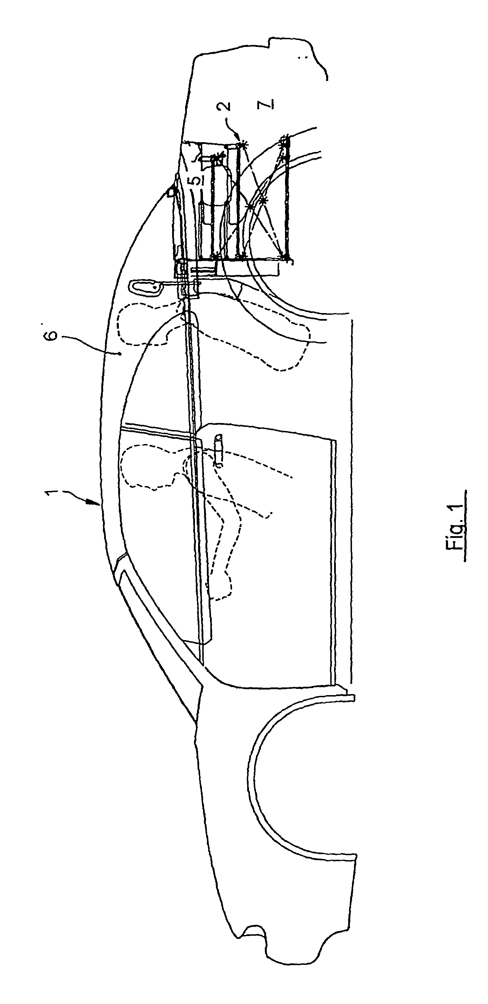

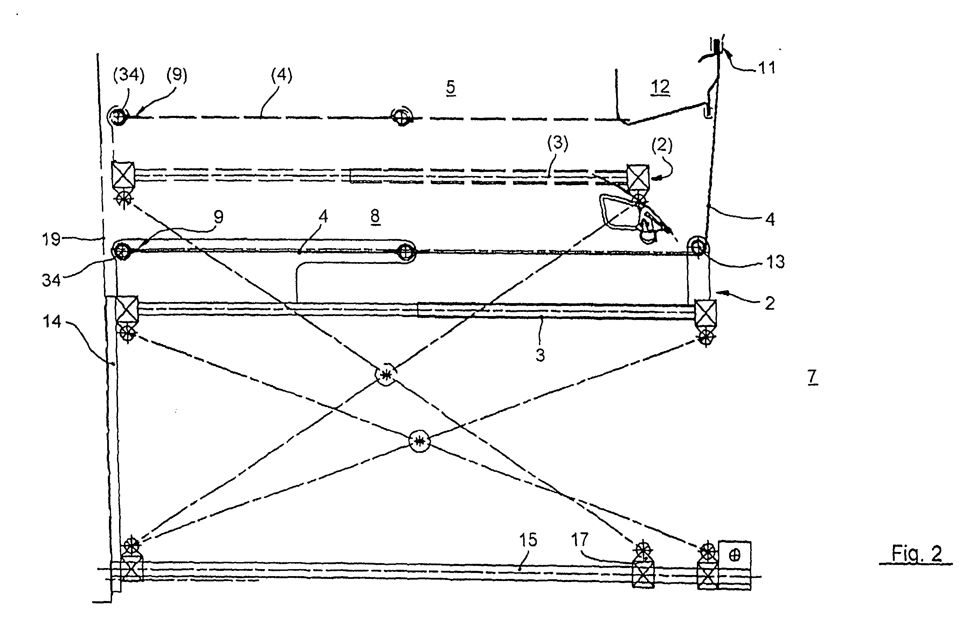

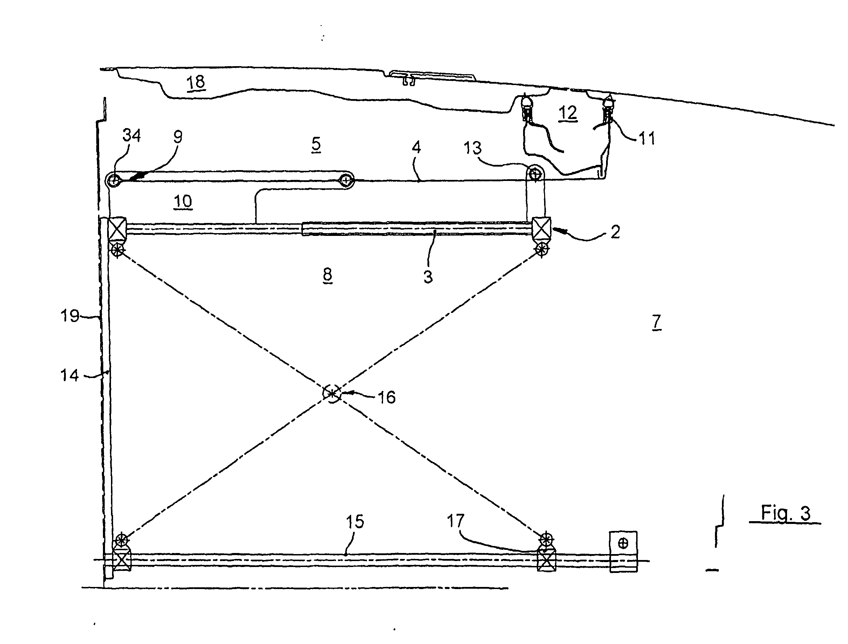

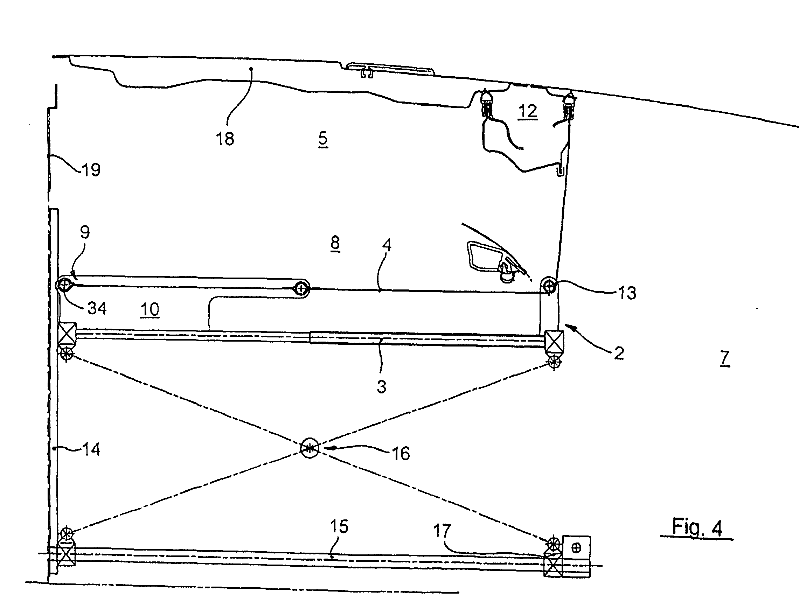

In einem ersten Ausführungsbeispiel (Fig. 1 bis Fig. 4) weist das Kraftfahrzeug 1 eine Trennvorrichtung 2 auf, bei der seitlich jeweils ein längenveränderlicher und sich in Fahrtrichtung horizontal erstreckender Seitenrahmen 3 zur Halterung einer zwischen diesen befindlichen textilen Bespannung 4 vorgesehen ist. Die Trennvorrichtung 2 grenzt einen Verdeckkasten 5 zur Aufnahme eines falt- oder klappbaren Verdecks 6 von einem Kofferraum 7 ab. Die textile, an den beiden seitlichen Rahmen 3 zumindest mittelbar gehaltene Bespannung 4 ist vertikal verfahrbar zwischen einer oberen (Fig. 3) und einer unteren (Fig. 4) Endstellung. Dadurch wird ein Zusatzraum 8 entweder dem Verdeckkasten 5 oder dem Kofferraum 7 zugeordnet. Es ergibt sich eine Verdeckaufbewahrungsstellung bei Zuordnung des Zusatzraumes 8 zum Verdeckkasten 5, also in unterer Stellung der Trennvorrichtung 2, und eine Gepäckaufbewahrungsstellung in oberer Stellung der Trennvorrichtung 2, bei der der Zusatzraum 8 einen Teil des Kofferraums 7 ausbildet (Fig. 3). Dieser ist daher in Gepäckaufnahmestellung gegenüber seinem sonstigen Fassungsvermögen um den Zusatzraum 8 vergrößert. Die textile Bespannung 4 ist mit ihrem vorderen Endbereich 9 an einem die Ausleger 10 der seitlichen Rahmenteile 3 miteinander verbindenden Profil 34 gehalten. Im rückwärtigen Bereich 11 der textilen Bespannung 4 ist diese an einem Querprofil 12, das den Verdeckkasten 5 nach hinten begrenzt, festgelegt. Die textile Bespannung 4 ist dehnbar, ihre Länge kann zwischen der in Fig. 3 gezeigten Minimallänge und der in Fig. 4 gezeigten Maximallänge variieren. Hierfür kann entweder die textile Bespannung 4 auf ihrer gesamten Länge dehnbar sein, oder es können einzelne dehnungsfähige Zonen eingearbeitet sein, beispielsweise an den Endbereichen. Auch sind außerhalb der textilen Bespannung 4 federnde Elemente möglich, an denen die Bespannung 4 gehalten ist. Die Bespannung 4 ist nachgiebig, beispielsweise gegenüber auftreffenden Gepäckstücken.

Die textile Bespannung 4 bildet den Bodenbereich der Verdeckwanne 5 sowohl in Gepäck- als auch Verdeckaufbewahrungsstellung aus, zudem ist in Verdeckaufbewahrungsstellung auch die heckseitige Vertikalwandung von der textilen Bespannung 4 gebildet (Fig. 4). Im Übergangsbereich ist ein Querholm 13 zur Verbindung der seitlichen Rahmenteile 3 angeordnet, um den herum die Bespannung 4 umlenkend geführt ist. Das festgelegte vordere Ende 9 der Bespannung 4 ist über eine vertikale Kulisse 14, an der die Rahmen 3 geführt sind, auf und ab verfahrbar.

Die Rahmen 3 sind als ineinander teleskopisch gegeneinander verschiebliche Rohre ausgebildet, die mit einem parallel verlaufenden Basisrohr oder dergleichen Profil 15 über ein Seilkreuz 16 oder eine starre Scherenkonstruktion in Verbindung stehen. Auf dem unteren Profil 15 ist ein Reiter 17 horizontal verschieblich geführt. Über das Scheren- bzw. Seilkreuz 16 wird dessen Horizontalverschiebung auf die teleskopisch gegeneinander verschieblichen Rohre der seitlichen Rahmen 3 übertragen. Bei Absenkung der seitlichen Rahmen 3 in der Kulisse 14 - und damit Dehnung der Bespannung 4, Übergang in die Verdeckaufnahmestellung - werden die seitlichen Rahmen 3 abwärts geführt und gleichzeitig verlängert. Umgekehrt werden bei Übergang in die Gepäckaufnahmestellung (Fig. 3) die seitlichen Rahmen 3 mit der daran festgelegten textilen Bespannung 4 nicht nur vertikal aufwärts gefahren, sondern gleichzeitig verkürzt, wodurch der Stauraum, der im Kofferraum 7 zur Verfügung steht, zusätzlich vergrößert wird. Diese Längenänderung wird durch Bewirkung der Vertikalbewegung automatisch mit eingestellt, zur Betätigung der Umwandlung der Trennvorrichtung reicht daher eine vertikale Hub- oder Druckbewegung aus. Diese kann über ein Antriebselement, beispielsweise einen Bowdenzug, bewirkt werden. Der Bowdenzug kann fernausgelöst sein, etwa vom Armaturenbrett, vorzugsweise jedoch über ein Steuerelement, das während des Verdecköffnens bzw. -schließens oder des Öffnens oder Schließens des Verdeckkastendeckels 18 betätigt wird.

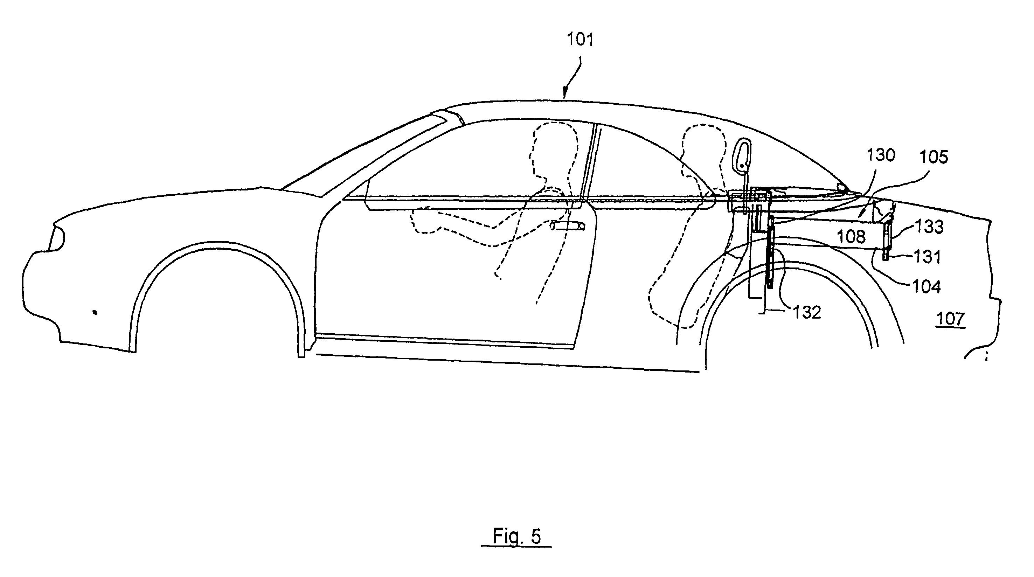

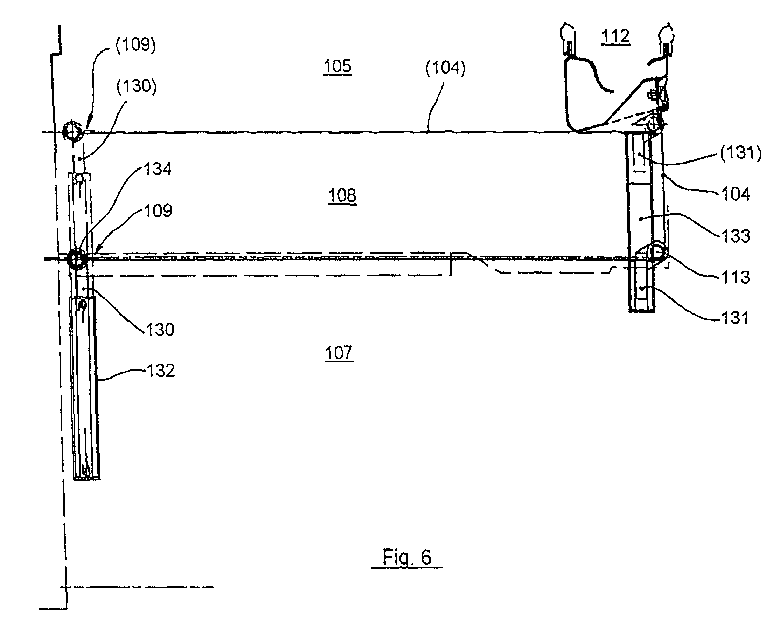

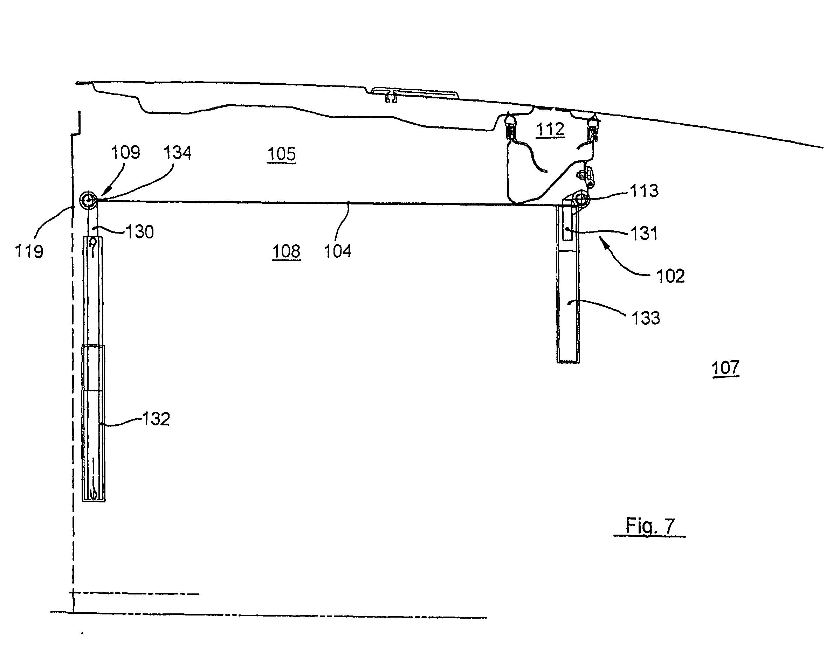

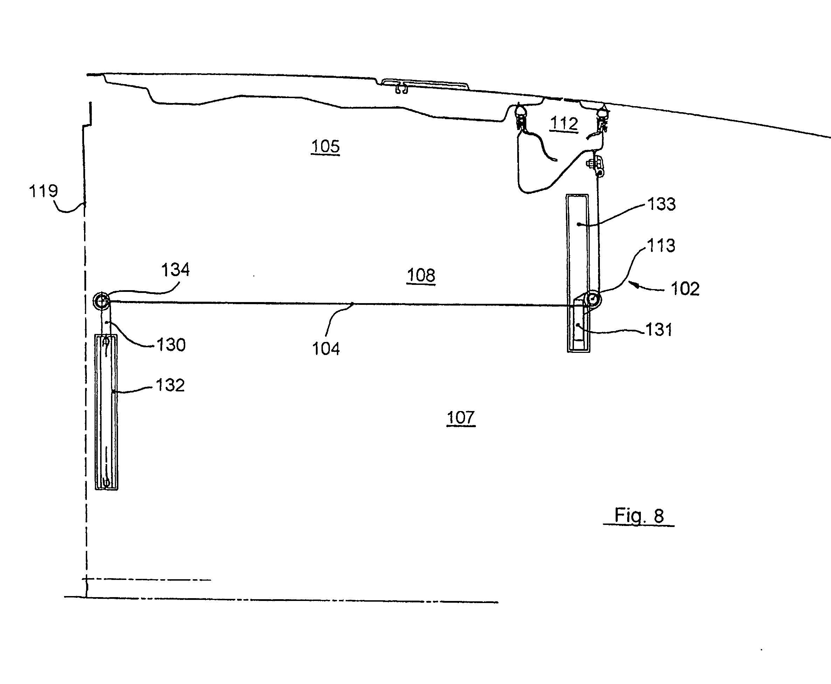

Gemäß einem zweiten Ausführungsbeispiel (Fig. 5 bis Fig. 8) weist die Trennvorrichtung 102 des Kraftfahrzeugs 101 eine textile Bespannung 104 auf, die an einer vorderen Querverbindung 134 sowie an einer hinteren Umlenkachse 113 jeweils an sich vertikal erstreckenden Haltern 130,131 gehalten ist. Die Halter 130,131 sind in Kulissen 132,133 parallel vertikal verschieblich. Die Kulissen 132,133 erstrecken sich seitlich der textilen Bespannung 104, so daß zwei vordere Kulissen 132 und zwei hintere Kulissen 133 den jeweiligen Eckbereichen der textilen Bespannung 104 zugeordnet sind. Der Übergang von der Verdeckaufnahmestellung (Fig. 8) zur Gepäckaufnahmestellung (Fig. 7) und umgekehrt ist daher eine reine Vertikalbewegung der Halter 130,131 in den Kulissen 132,133. Dadurch werden die vordere Festlegung 134 sowie die Umlenkachse 113, die beispielsweise jeweils durch ein Querrohr gebildet sein können, auf- bzw. abwärts verschoben, wodurch der Zusatzraum 108 entweder dem Verdeckkasten 105 oder dem Kofferraum 107 zugeordnet wird. Hinsichtlich der Dehnbarkeit der textilen Bespannung 104 gilt das für das erste Ausführungsbeispiel Gesagte entsprechend. Auch hier bildet die Bespannung 104 in Verdeckaufnahmestellung (Fig. 8) sowohl den Bodenbereich als auch die hintere Vertikalwand des Verdeckkastens 105 aus. Mit seinem rückwärtigen Ende des vertikal verlaufenden Abschnitts der Bespannung 104 ist diese ebenfalls an einem Querträger 112 festgelegt.

Die Vertikalbewegung der textilen Bespannung 104 kann wiederum über einen Bowdenzug oder dergleichen bewirkt werden. Besonders vorteilhaft ist es, die vier Kulissen 132 bzw. 133 über den Bowdenzug miteinander zu synchronisieren. Insbesondere kann eine Bowdenzugverbindung zwischen den vorderen Festlegungen 109 und dem quer verlaufenden Umlenkrohr 113 zur Kopplung der Bewegungen vorgesehen sein.

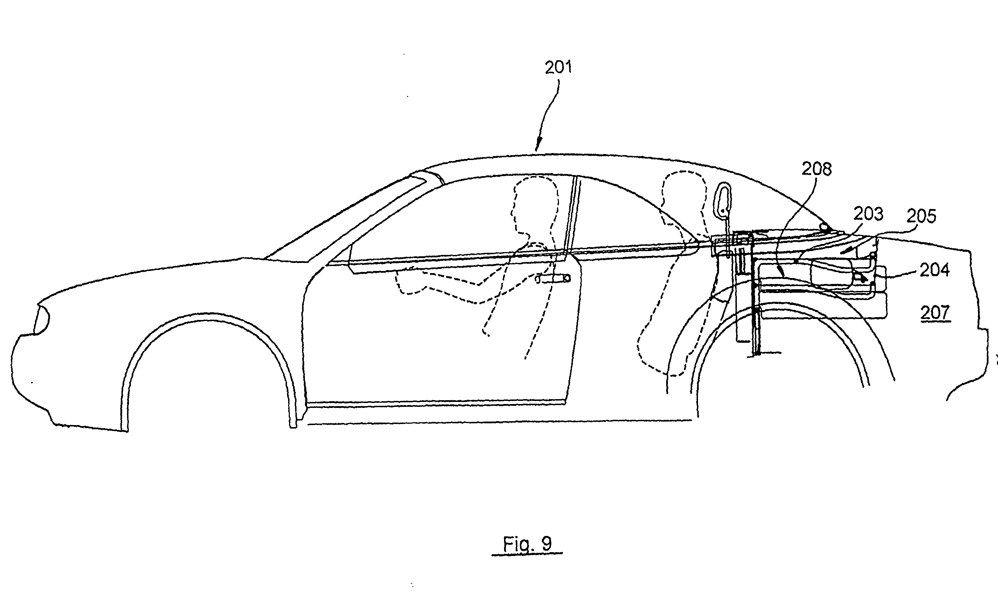

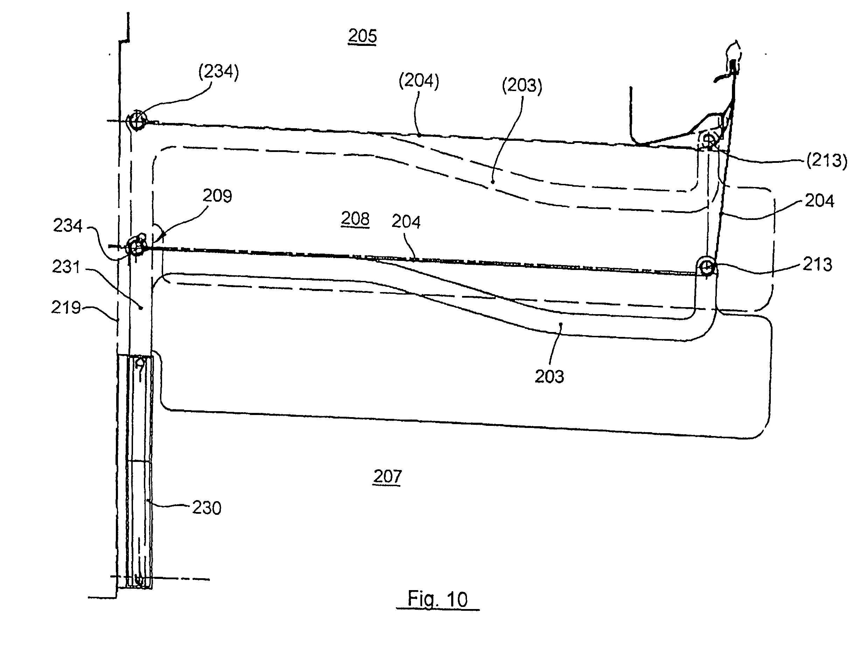

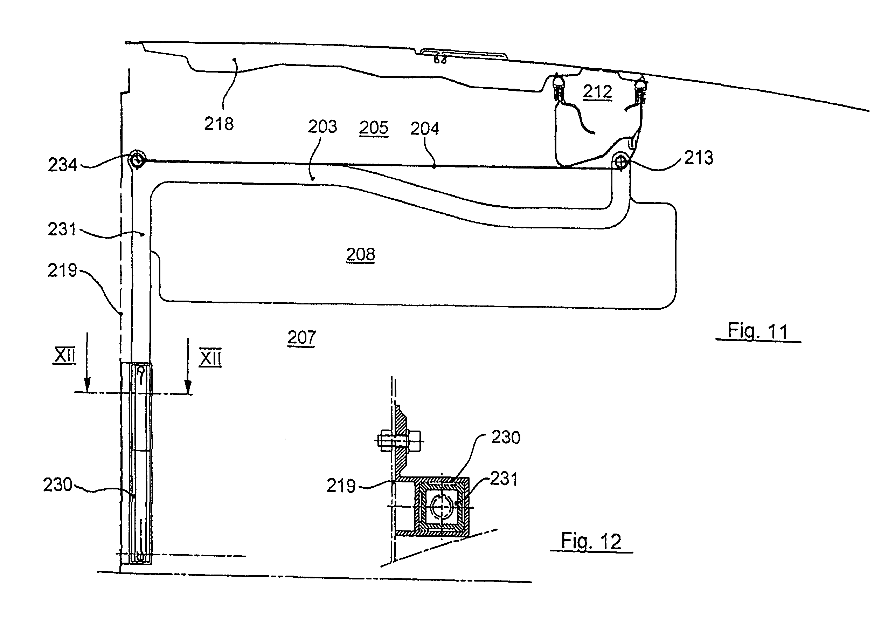

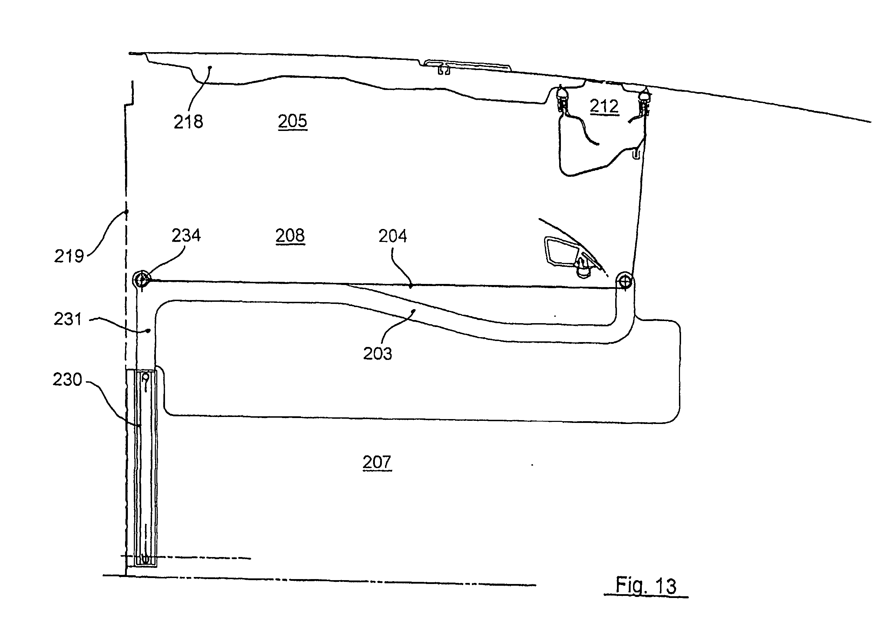

Gemäß einem dritten Ausführungsbeispiel (Fig. 9 bis Fig. 15) sind wie schon im ersten Ausführungsbeispiel feste Seitenrahmen 203 vorgesehen, die über ein Querrohr 234 im Bereich der vorderen Festlegung 209 der textilen Bespannung 204 miteinander verbunden sind. Eine zweite Verbindung ist mit dem hinteren Querrohr 213 geschaffen, das bei vertikaler Bewegung auf der textilen Bespannung 204 abgleitet oder abrollt. Die horizontal verlaufenden Rahmen 203 sind im vorderen, der Spritzwand 219 zugewandten Bereich mit vertikalen Auslegern 231 verbunden, die in Kulissen 230 vertikal verschieblich gehalten sind, ganz analog zum zweiten Ausführungsbeispiel. Die Ausleger 231 können einstückig mit den seitlichen Rahmen 203 ausgebildet sein. Insgesamt ist über die Querrohre 213 und 234 sowie die jeweils außen verlaufenden Rahmenteile 203 ein stabilisierter, umlaufender Spannrahmen für die textile Bespannung 204 ausgebildet, die wiederum nicht nur den Bodenbereich des Verdeckkastens 205, sondern auch in Verdeckaufnahmestellung die vertikale rückseitige Wand des Verdeckkastens 205 ausbildet.

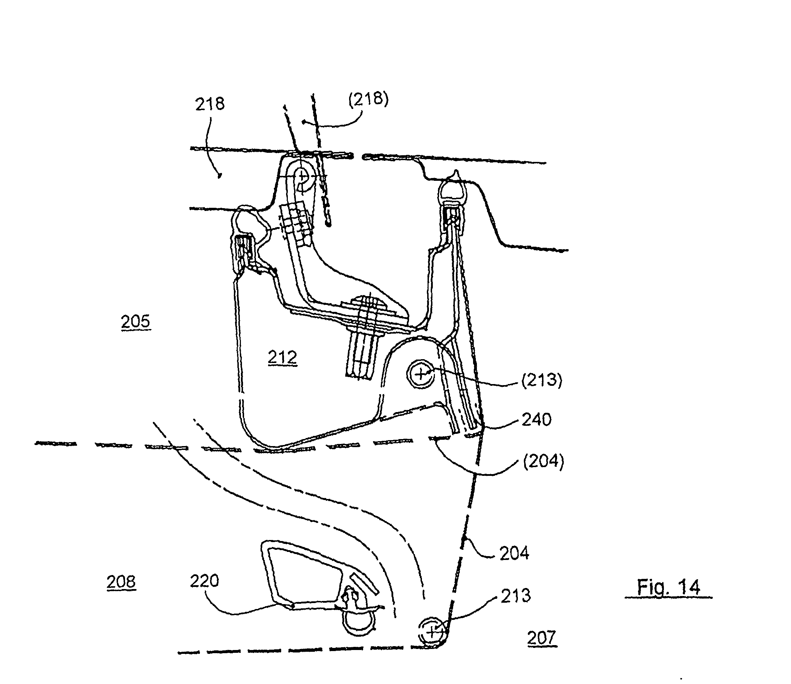

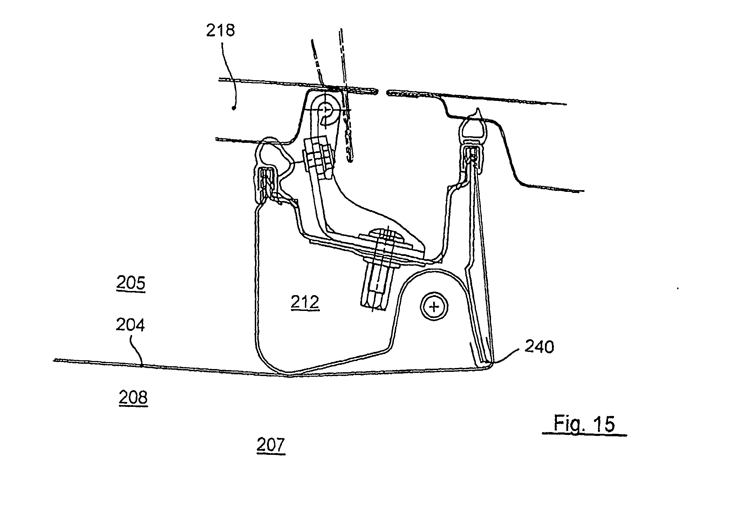

In Fig. 12 ist die Anordnung einer Vertikalkulisse 230 an der Spritzwand 219 verdeutlicht. Diese beispielsweise über Schrauben oder dergleichen Befestigungsmittel an der Spritzwand 219 befestigten Vertikalkulisse 230 wird in den verschiedenen Ausführungsbeispielen in im wesentlichen gleichartiger Weise verwandt. In Fig. 14 ist dargestellt, wie in Verdeckaufnahmestellung die textile Bespannung 204 im Umlenkungsbereich von einem Querrohr 213, das auf der textilen Bespannung abgleitet oder -rollt, gedehnt ist. Der hintere Verdeckbereich 220 ist in seiner im Verdeckkasten 205 aufgenommenen Stellung angedeutet. Die Gepäckaufnahmestellung ist in dieser Figur bereits gestrichelt eingezeichnet und in Fig. 15 ausgeführt. Dann liegt die textile Bespannung 204 nicht mehr an der Umlenkrolle 213 an, sondern diese gelangt außer Eingriff mit der Bespannung 204. Die textile Bespannung 204 wird in dieser Stellung von einem Kantenbereich 240 des den Verdeckkasten 205 nach hinten begrenzenden Profils 212 gehalten und umgelenkt.

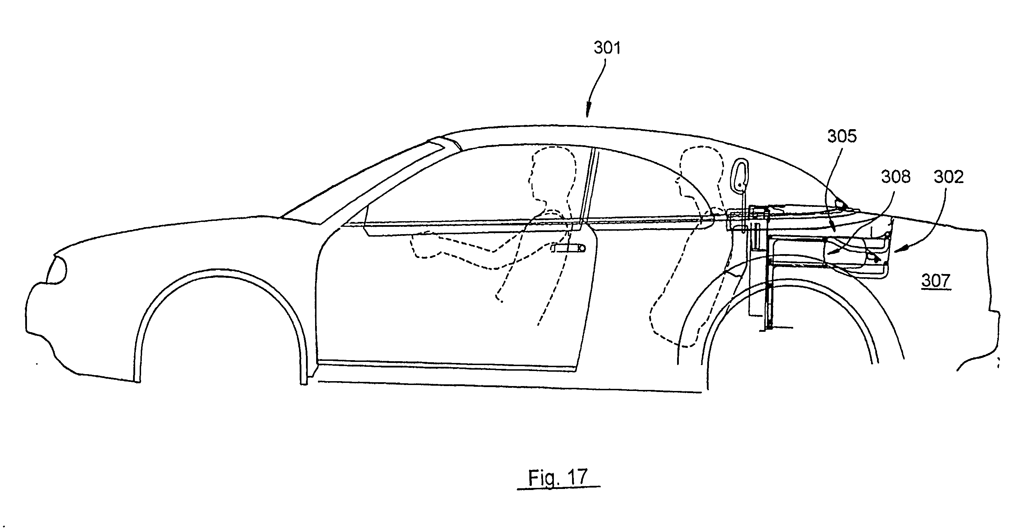

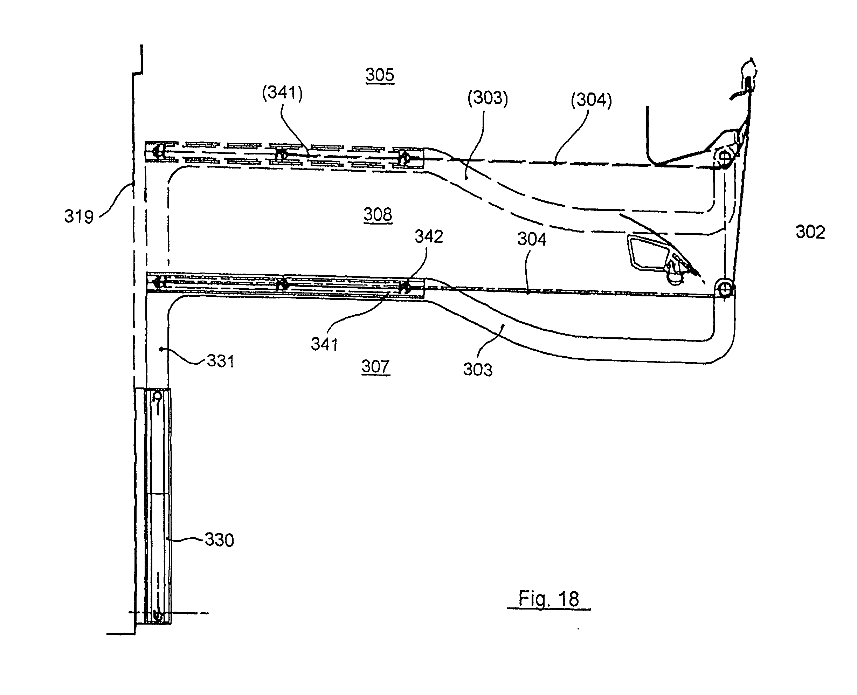

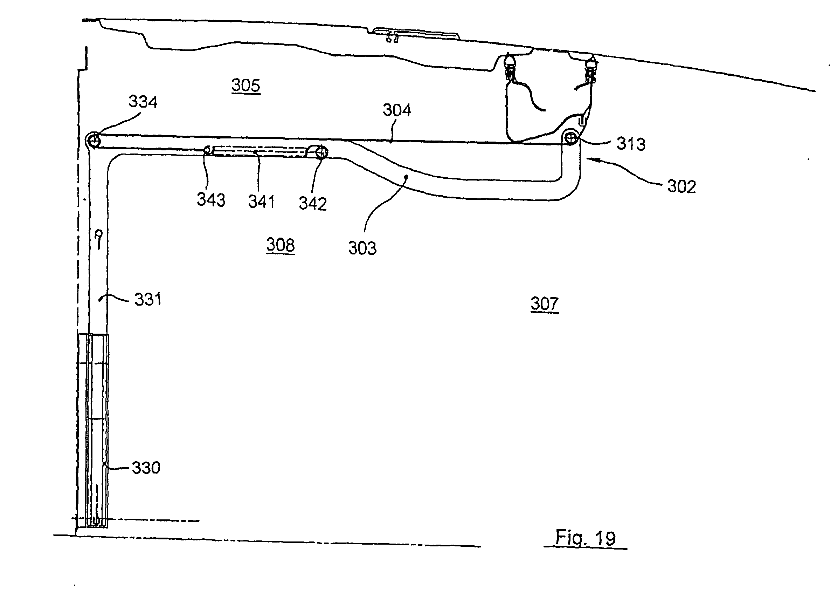

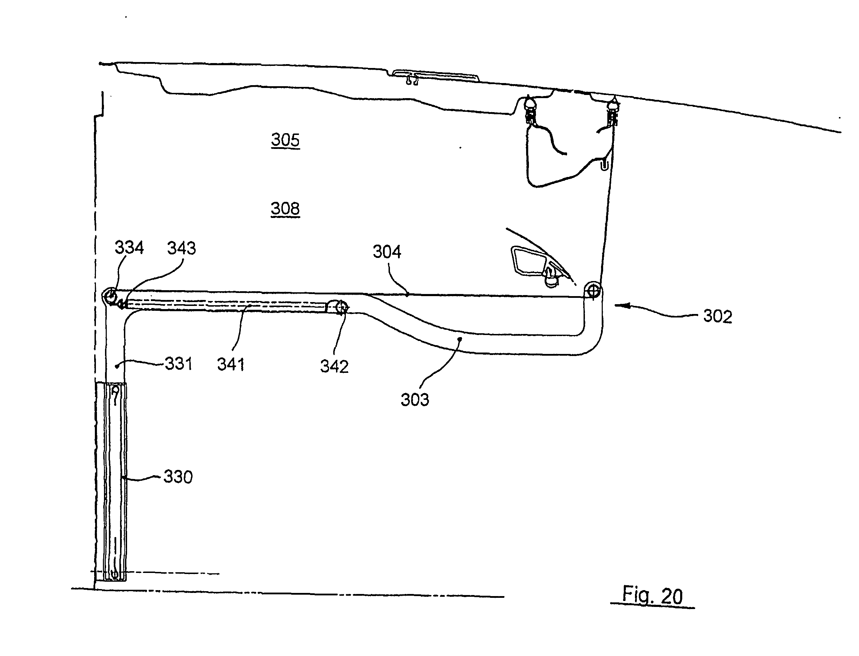

Gemäß einem vierten Ausführungsbeispiel (Fig. 17 bis Fig. 20) ist bei grundsätzlich gleichartigen Verhältnissen wie im dritten Ausführungsbeispiel die Bespannung 304 selbst nicht längendehnbar, sondern ist an einer Zugfeder oder dergleichen 341 gehalten, die ihrerseits an einer festen Anlenkung 342 am Seitenrahmen 303 gehalten ist und anderenends ein freies Ende 343 aufweist, das mit der textilen Bespannung 304 verbunden ist. Diese ist über eine vordere Umlenkrolle 334 umgelenkt und erstreckt sich von dieser bis zur einer hinteren Umlenkrolle 313 horizontal als Bodenbereich des Verdeckkastens 305. Die Zugfedern 341 können den seitlichen Rahmen 303 zugeordnet sein. Auch kann vorgesehen sein, daß die Zugfedern 341 an dem Querverbinder 334 festgelegt sind. Diese können dann gleichmäßig über die Breite der Bespannung 304 verteilt sein. Die Zugelemente 341 können auch im Verlauf der Bespannung 304 angeordnet sein. Bei Übergang von der Gepäckaufnahmestellung (Fig. 19) zur Verdeckaufnahmestellung (Fig. 20) wird die Zugfeder 341 ausgezogen und gedehnt, die textile Bespannung 304 behält hingegen ihre ursprüngliche Länge bei. Dadurch können hochwertige Textilien verwendet werden, beispielsweise kann auch eine feste Einlage vorgesehen sein. Die Führung des Auslegers 331 in der Kulisse 330 ist identisch mit der des dritten Ausführungsbeispiels. Die Trennvorrichtung 302 zeigt daher die Möglichkeit, den Bodenbereich des Verdeckkastens 305 durch nicht dehnbare Elemente, die neben der textilen Ausbildung auch plattenförmige Anteile enthalten können, optisch aufzuwerten und auch hinsichtlich der Kosten günstig zu halten, da ein spezielles dehnbares Gewebe nicht verwendet werden muß.

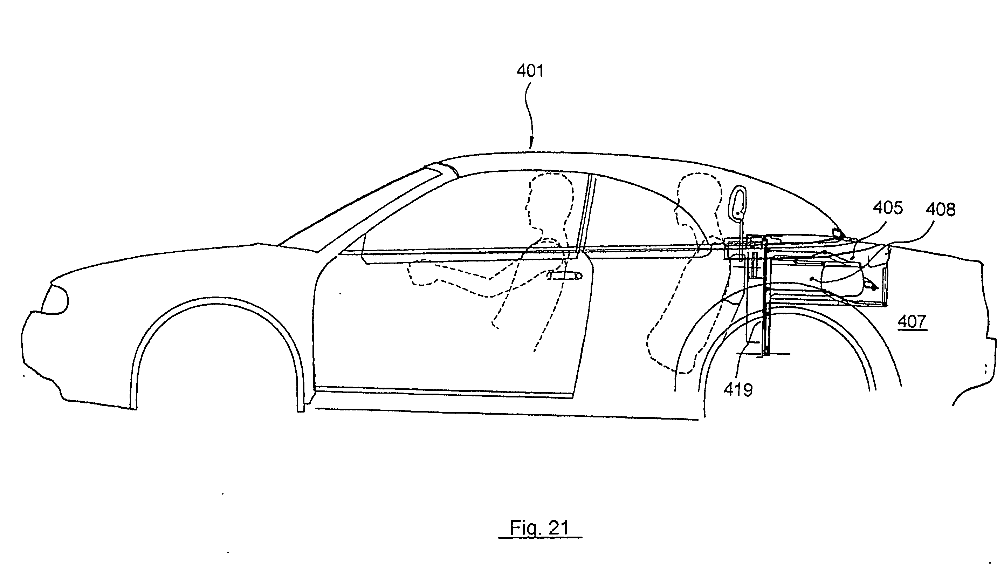

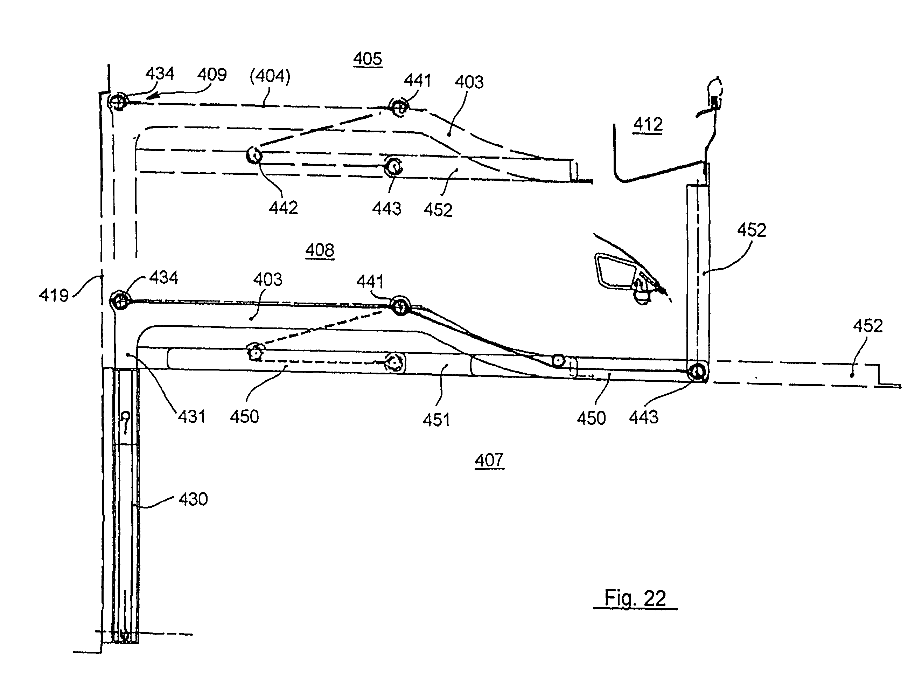

Gemäß einem fünften Ausführungsbeispiel (Fig. 21 bis Fig. 26) ist die textile Bespannung 404 der Trennvorrichtung 402 nur im vorderen, der Spritzwand 419 zugewandten Bereich sowohl in Verdeck- als auch in Gepäckaufbewahrungsstellung als Teil des Bodens des Verdeckkastens 405 ausgebildet.

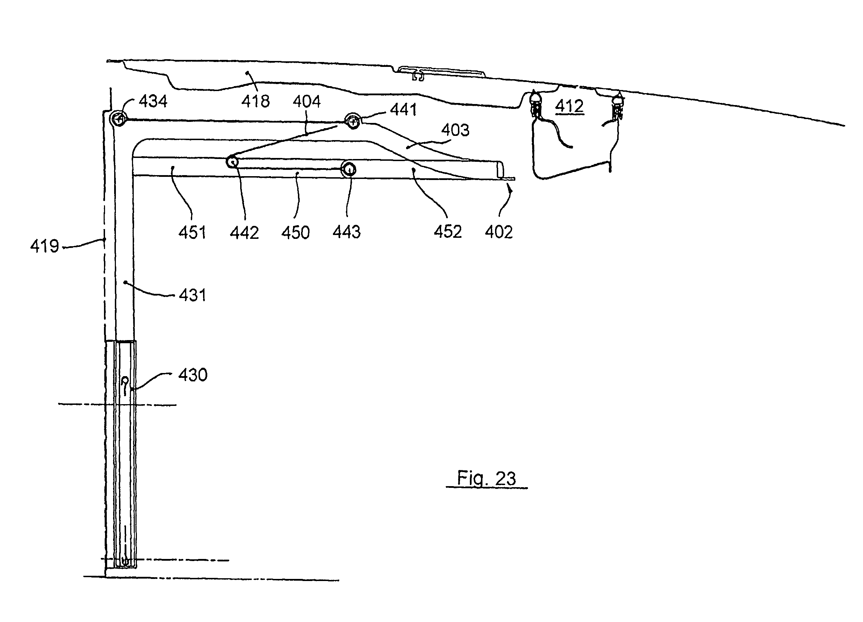

Die textile Bespannung erstreckt sich dabei von einer vorderen Festlegung 409 an einem Querrohr 434 bis zu einem ersten umlenkenden Querrohr 441, das die beiden Seitenrahmen 403 miteinander verbindet. Von hier aus wird die Bespannung 404 zu einer zweiten Umlenkachse 442 und von dort aus zu einer hinteren Festlegung 443 umgeleitet. Die Umlenkachsen 443 und 442 sind gegenüber der ersten Umlenkachse 441 horizontal in bzw. gegen die Fahrtrichtung verschieblich. Hierzu sind die Seitenrahmen 403 jeweils mehrteilig ausgebildet und weisen ein in einer Kulisse 451 des Seitenrahmens 403 geführtes ausziehbares Rohrteil 450 auf. Im Bereich der Achse 443 ist an das ausziehbare seitliche Rohrstück 451 eine Klappe 452 schwenkbar angelenkt, die durch Einschieben der Rohrstücke 450 in die Führungen 451 in horizontaler Stellung in Fahrtrichtung verschoben wird. In Gepäckaufbewahrungsstellung (Fig. 23) sind daher sowohl das Rohrstück 450 als auch die daran heckseitig angelenkte schwenkbare Platte 452 in die horizontale Führung 451 eingeschoben. Die gesamte Trennvorrichtung 402 ist daher in Fahrtrichtung verkürzt und nimmt den Raum zwischen dem Abschlußprofil 412 des Verdeckkastens 405 und der Spritzwand 419 ein. Durch die Verkürzung der Trennvorrichtung 402 kann diese in Gepäckaufbewahrungsstellung besonders raumsparend weit nach oben verschoben werden. Die feste Klappe 452 ist dabei insofern nicht hinderlich, als diese im Schattenraum des Profils 412 gelagert ist, der ohnehin für Gepäck praktisch nicht nutzbar ist. Durch das Einschieben der Teile 450 und 452 wird die textile Bespannung 404 in einem mittleren Bereich über die vordere Umlenkung 442 mäanderförmig umgelenkt, die hintere Festlegung 443 der Bespannung 404 liegt dann im wesentlichen unterhalb der vorderen Umlenkung 441.

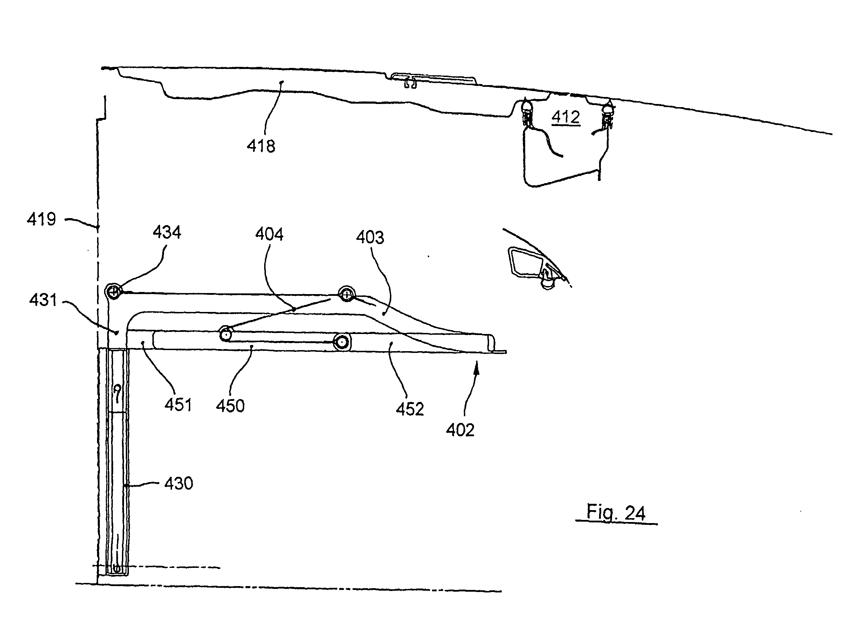

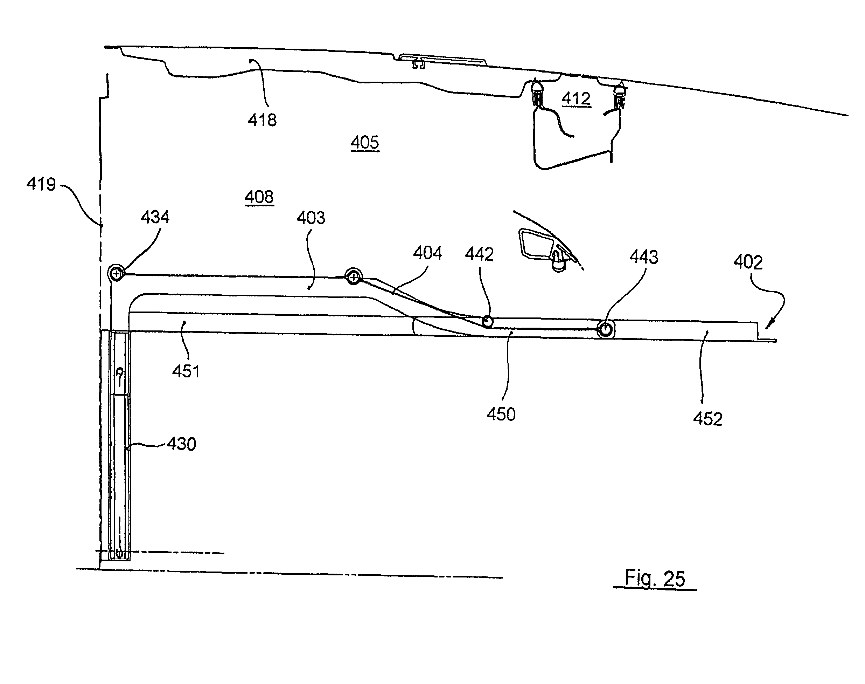

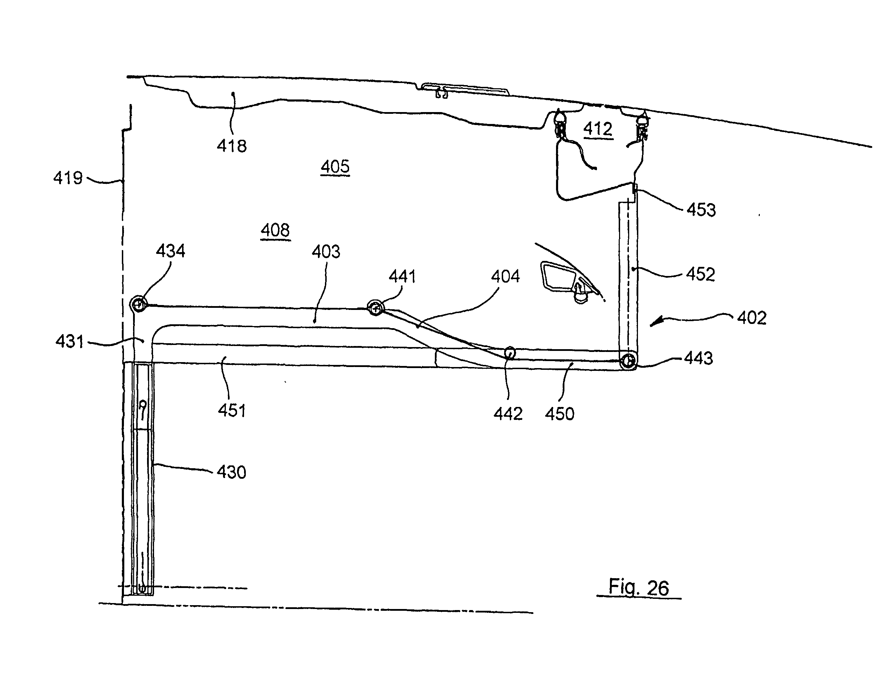

Um die Trennvorrichtung 402 aus der Gepäckaufnahmestellung nach Fig. 23 in die Verdeckaufnahmestellung nach Fig. 26 zu überführen, wird diese über die seitlichen vertikalen Ausleger 431 in den Kulissen 430, die wiederum gleichartig zu den vorigen Ausführungsbeispielen gestaltet sind, vertikal abwärts verfahren, so daß die in Fig. 24 dargestellte Position erreicht wird. Durch horizontalen Auszug des Plattenteils 452 sowie der damit an dem Querrohr 443 verbundenden Rohrabschnitte 450 in der Führung 451 wird zunächst eine horizontale Verlängerung der Trennvorrichtung 402 nach hinten bewirkt (Fig. 25). Die Umlenkachsen 442 und 443 werden mit nach hinten ausgezogen, so daß die darüber laufende textile Bespannung 404 sich in dieser Stellung von der der Spritzwand 419 zugeordneten Festlegung 434 bis hin zur hinteren Festlegung 443 erstreckt, die dann unterhalb eines rückwärtigen Endes des Querprofils 412 liegt. Die textile Bespannung 404 überdeckt in dieser Stellung den gesamten Bodenbereich des Verdeckkastens 405. Aus diesem Zustand heraus kann die Klappe 452 dann um die Umlenkachse 443 vertikal aufwärts verschwenkt werden, so daß sie mit ihrem Endbereich 453 am rückwärtigen Ende des Querprofils 412, das den Verdeckkasten 405 rückseitig begrenzt, anliegt (Fig. 26). Damit ist die Verdeckaufnahmestellung hergestellt, in der der Bodenbereich des Verdeckkastens 405 mit dem Zusatzraum 408 über die textile Bespannung 404, die an seitlichen Rahmenteilen 403 und diesen gegenüber ausziehbaren Rohrabschnitten 450 gehalten ist, gebildet ist. Die vertikale Rückwand des Verdeckkastens 405 ist durch die Schwenkklappe 452 gebildet. Aufgrund der Möglichkeit, diese in Gepäckaufnahmestellung durch Hochfahren hinter das Querprofil 412 zu verstauen, bedeutet diese jedoch nur eine minimale Einschränkung des nutzbaren Raumes. Die seitlichen Rahmenteile 403 sind wie auch schon in vorigen Ausführungsbeispielen abgekröpft, der Bodenbereich des Verdeckkastens 405 enthält daher eine Stufe, so daß der rückwärtige Bereich eine größere Tiefe aufweist.

## Patentansprüche

1. Kraftfahrzeug (1;101;201;301;401) mit einem in einem Verdeckkasten (5;105;205;305;405) ablegbaren Verdeck (6), wobei der Verdeckkasten (5;105;205;305;405) in einem rückwärtigen Fahrzeugbereich an den Kofferraum (7;107;207;307;407) angrenzend gelegen und gegenüber diesem durch eine variable Trennvorrichtung (2;102;202;302;402) abgeteilt ist, wobei die Trennvorrichtung (2;102;202;302;402) einen Zusatzraum (8;108;208; 308;408) zumindest bereichsweise begrenzt und zwischen einer Verdeckaufnahmestellung, in der der Verdeckkasten (5;105;205;305;405) um den Zusatzraum (8;108;208;308;408) vergrößert ist, und einer Gepäckaufnahmestellung, in der der Zusatzraum (8;108;208;308;408) einen Teil des Kofferraums (7;107;207;307;407) ausbildet, bewegbar ist, **dadurch gekennzeichnet, daß** die Trennvorrichtung (2;102;202;302;402) eine sich im wesentlichen horizontal erstreckende, zwischen zumindest seitlichen Rahmenteilen (3;103; 203; 303;403) gehaltene und zwischen einer oberen und einer unteren Endstellung vertikal verschiebliche textile Bespannung (4;104;204;304;404) umfaßt.

2. Kraftfahrzeug nach Anspruch 1, **dadurch gekennzeichnet, daß** zumindest ein Teilbereich der textilen Bespannung (4;104;204;304;404) sowohl in Gepäckaufnahme- als auch in Verdeckaufnahmestellung zumindest einen Teil eines Bodenbereichs des Verdeckkastens (5;105;205;305;405) ausbildet.

3. Kraftfahrzeug nach einem der Ansprüche 1 oder 2, **dadurch gekennzeichnet, daß** zur Verschiebung der Trennvorrichtung (2;102;202;302;402) ein Antriebselement vorgesehen ist.

4. Kraftfahrzeug nach Anspruch 3, **dadurch gekennzeichnet, daß** das Antriebselement mit der Verdeck- bzw. Verdeckkastenbetätigung gekoppelt ist.

5. Kraftfahrzeug nach einem der Ansprüche 3 oder 4, **dadurch gekennzeichnet, daß** zur Verschiebung der Trennvorrichtung (2;102;202;302;402) ein Bowdenzug vorgesehen ist.

6. Kraftfahrzeug nach einem der Ansprüche 1 bis 5, **dadurch gekennzeichnet, daß** die textile Bespannung (4;104;204) dehnbar gehalten ist und in Verdeckaufnahmestellung eine gegenüber der Gepäckaufnahmestellung vergrößerte Länge aufweist.

7. Kraftfahrzeug nach einem der Ansprüche 1 bis 6, **dadurch gekennzeichnet, daß** der textilen Bespannung (304) ein externes Federelement (341) zugeordnet ist.

8. Kraftfahrzeug nach einem der Ansprüche 1 bis 7, **dadurch gekennzeichnet, daß** zumindest in Verdeckaufnahmestellung die Trennvorrichtung (2;102;202;302) einen horizontalen Bodenbereich sowie einen im wesentlichen vertikalen, rückwärtigen Wandungsbereich des Verdeckkastens (5;105;205;305) ausbildet und der rückwärtige, vertikale Wandungsbereich ebenfalls durch textile Bespannung (4;104;204;304) gebildet ist.

9. Kraftfahrzeug nach Anspruch 8, **dadurch gekennzeichnet, daß** die textile Bespannung (4;104;204;304) des rückwärtigen Bereichs einstückig mit der zumindest einen Teil des Bodenbereichs ausbildenden horizontal verlaufenden textilen Bespannung ausgebildet ist und sich zwischen beiden Anteilen der textilen Bespannung eine im wesentlichen in Fahrzeugquerrichtung erstreckende Umlenkachse (13;113;213;313) befindet.

10. Kraftfahrzeug nach einem der Ansprüche 1 bis 9, **dadurch gekennzeichnet, daß** die textile Bespannung (4;104;204;304;404) mit ihrem in Fahrtrichtung vorderen Ende (9;109;209;309;409) an einem mit den seitlichen Rahmenteilen (3;103;203;303;403) in Verbindung stehenden Querverbinder (34; 134;234;334;434) festgelegt ist.

11. Kraftfahrzeug nach Anspruch 10, **dadurch gekennzeichnet, daß** die Rahmenteile (3;403) längenvariabel sind und teleskopisch gegeneinander ausziehbare Abschnitte umfassen.

12. Kraftfahrzeug nach einem der Ansprüche 1 bis 11, **dadurch gekennzeichnet, daß** die vordere Festlegung der textilen Bespannung (4;104;204; 304;404) im Bereich einer den Verdeckkasten (5;105;205;305;405) gegen die Rücksitze abgrenzenden Spritzwand (19;119;219;319;419) befindlich ist und vertikal auf- und abverfahrbar ist.

13. Kraftfahrzeug nach einem der Ansprüche 1 bis 12, **dadurch gekennzeichnet, daß** die Rahmenteile (403) zumindest zwei horizontal gegeneinander verschiebliche Abschnitte (450;451) sowie einen vertikal klappbaren und an dem hinteren horizontalen Abschnitt festgelegten weiteren Teil umfaßt (452), der in Gepäckaufbewahrungsstellung in den vorderen Rahmenteil (451) einschiebbar ist.

## Claims

1. Motor vehicle (1; 101; 201; 301; 401) having a folding top (6) able to be stowed in a folding-top compartment (5; 105; 205; 305; 405), the folding-top compartment (5; 105; 205; 305; 405) being situated in a rear region of the vehicle adjacent to the boot (7; 107; 207; 307; 407) and being divided off from the latter by a variable separating arrangement (2; 102; 202; 302; 402), the separating arrangement (2; 102; 202; 302; 402) defining, at least in certain areas, an additional space (8; 108; 208; 308; 408), and being movable between a position for receiving the folding top in which the folding-top compartment (5; 105; 205; 305; 405) is enlarged by the additional space (8; 108; 208; 308; 408) and a position for receiving luggage in which the additional space (8; 108; 208; 308; 408) forms part of the boot (7; 107; 207; 307; 407), **characterised in that** the separating arrangement (2; 102; 202; 302; 402) comprises a textile covering (4; 104; 204; 304; 404) which extends substantially horizontally, which is held between at least lateral frame members (3; 103; 203; 303; 403), and which is displaceable vertically between an upper end position and a lower end position.

2. Motor vehicle according to claim 1, **characterised in that,** both in the position for receiving luggage and in the position for receiving the folding top, at least a subregion of the textile covering (4; 104; 204; 304; 404) forms at least part of the floor region of the folding-top compartment (5; 105; 205; 305; 405).

3. Motor vehicle according to either of claims 1 and 2, **characterised in that** a drive element is provided for displacing the separating arrangement (2; 102; 202; 302; 402).

4. Motor vehicle according to claim 3, **characterised in that** the drive element is coupled to the actuating means for the folding top or for the folding-top compartment.

5. Motor vehicle according to either of daims 3 and 4, **characterised in that** a Bowden cable is provided for displacing the separating arrangement (2; 102; 202; 302; 402).

6. Motor vehide according to one of daims 1 to 5, **characterised in that** the textile covering (4; 104; 204) is held in such a way as to be stretchable and is of a length which is increased in the position for receiving the folding top as compared with the position for receiving luggage.

7. Motor vehicle according to one of claims 1 to 6, **characterised in that** the textile covering (304) has an outside spring member (341) associated with it.

8. Motor vehide according to one of claims 1 to 7, **characterised in that,** at least in the position for receiving the folding top, the separating arrangement (2; 102; 202; 302) forms a horizontal floor region of the folding-top compartment (5; 105; 205; 305) and a substantially vertical rear wall region thereof, and the rear, vertical wall region is also formed by a textile covering (4; 104; 204; 304).

9. Motor vehicle according to claim 8, **characterised in that** the textile covering (4; 104; 204; 304) of the rear region is formed in one piece with the horizontally extending textile covering which forms at least part of the floor region, and a direction-changing shaft (13, 113, 213, 313) extending substantially in the transverse direction of the vehicle is situated between two portions of the textile covering.

10. Motor vehide according to one of claims 1 to 9, **characterised in that** the textile covering (4; 104; 204; 304; 404) is fastened, by its end (9; 109; 209; 309; 409) which is at the front in the direction of travel, to a transverse connector (34; 134; 234; 334; 434) which is connected to the lateral frame members (3; 103; 203; 303; 403).

11. Motor vehide according to claim 10, **characterised in that** the frame members (3; 403) are variable in length and comprise sections which are mutually extendable telescopically.

12. Motor vehide according to one of claims 1 to 11, **characterised in that** the front fastening for the textile covering (4; 104; 204; 304; 404) is situated in the region of a bulkhead which forms a boundary of the folding-top compartment (5; 105; 205; 305; 405) against the back seat, and is movable up and down vertically.

13. Motor vehide according to one of claims 1 to 12, **characterised in that** the frame members (403) comprise at least two portions (450; 451) able to be mutually displaced horizontally and a further portion (452) which is able to be hinged vertically, which is fastened to the rear horizontal portion and which is insertable in the front frame member (451) in the position for storing luggage.

## Revendications

1. Véhicule automobile (1 ; 101 ; 201 ; 301 ; 401) comportant une capote (6) qui se range dans un compartiment à capote (5 ; 105 ; 205 ; 305 ; 405),
le compartiment à capote (5 ; 105 ; 205 ; 305 ; 405) étant situé dans la partie arrière du véhicule de façon adjacente au coffre à bagages (7 ; 107 ; 207 ; 307 ; 407) en étant séparé de celui-ci par un dispositif de séparation variable (2 ; 102 ; 202 ; 302 ; 402),
le dispositif de séparation (2 ; 102 ; 202 ; 302 ; 402) délimitant au moins par zones un volume complémentaire (8 ; 108 ; 208 ; 308 ; 408) et mobile entre une position de rangement de la capote pour laquelle le compartiment à capote (5 ; 105 ; 205 ; 305 ; 405) est augmenté du volume complémentaire (8 ; 108 ; 208 ; 308 ; 408) et une position de rangement de bagages dans laquelle le volume complémentaire (8 ; 108 ; 208 ; 308 ; 408) est attribué au coffre à bagages (7 ; 107 ; 207 ; 307 ; 407),
**caractérisé en ce que**
le dispositif de séparation (2 ; 102 ; 202 ; 302 ; 402) comprend une toile tendue (4 ; 104 ; 204 ; 304 ; 404) s'étendant principalement horizontalement entre au moins des parties de châssis (3 ; 103 ; 203 ; 303 ; 403) latéraux et coulissant verticalement entre une position de fin de course haute et une position de fin de course basse.

2. Véhicule automobile selon la revendication 1,
**caractérisé en ce qu'**
au moins une zone partielle de la toile textile tendue (4 ; 104 ; 204 ; 304 ; 404) forme au moins une partie du fond du compartiment à capote (5 ; 105 ; 205 ; 305 ; 405) à la fois en position de rangement de bagages et en position de rangement de la capote.

3. Véhicule automobile selon l'une des revendications 1 ou 2,
**caractérisé par**
un élément d'entraînement pour coulisser le dispositif de séparation (2 ; 102 ; 202 ; 302 ; 402).

4. Véhicule automobile selon la revendication 3,
**caractérisé en ce que**
l'élément d'entraînement est couplé à un actionnement de capote ou de compartiment à capote.

5. Véhicule automobile selon l'une des revendications 3 ou 4,
**caractérisé par**
un câble Bowden pour coulisser le dispositif de séparation (2 ; 102 ; 202 ; 302 ; 402).

6. Véhicule automobile selon l'une des revendications 1 à 5,
**caractérisé en ce que**
la toile textile tendue (4 ; 104 ; 204) est maintenue extensible et en position de rangement de la capote elle présente une longueur augmentée par rapport à la position de rangement des bagages.

7. Véhicule automobile selon l'une des revendications 1 à 6,
**caractérisé en ce que**
la toile textile tendue (304) comporte un élément à ressort externe (341).

8. Véhicule automobile selon l'une des revendications 1 à 7,
**caractérisé en ce qu'**
au moins en position de rangement de la capote, le dispositif de séparation (2 ; 102 ; 202 ; 302 ; 402) forme une zone de fond horizontale ainsi qu'une zone de paroi arrière essentiellement verticale du compartiment à capote (5 ; 105 ; 205 ; 305 ; 405) et la zone de paroi verticale arrière est également formée par la toile textile tendue (4 ; 104 ; 204 ; 304 ; 404).

9. Véhicule automobile selon la revendication 8,
**caractérisé en ce que**
la toile textile tendue (4 ; 104 ; 204 ; 304 ; 404) de la zone arrière fait une seule pièce avec la toile textile tendue, horizontale, constituant au moins une partie de la zone de fond et entre les deux parties de la toile textile tendue on a un axe de renvoi (13 ; 113 ; 213 ; 313) qui s'étend essentiellement transversalement à la direction de déplacement.

10. Véhicule automobile selon l'une des revendications 1 à 9,
**caractérisé en ce que**
la toile textile tendue (4 ; 104 ; 204 ; 304 ; 404) est, au niveau de son extrémité avant (9 ; 109 ; 209 ; 309 ; 409) dans la direction de déplacement, fixée à une traverse (34 ; 134 ; 234 ; 334 ; 434) reliée aux parties de châssis latéraux (3 ; 403; 103 ; 203 ; 303 ; 403).

11. Véhicule automobile selon la revendication 10,
**caractérisé en ce que**
les parties de châssis (3 ; 403) sont de longueur variable et comportent des segments extensibles de manière télescopique.

12. Véhicule automobile selon l'une des revendications 1 à 11,
**caractérisé en ce que**
la fixation avant de la toile textile tendue (4 ; 104 ; 204 ; 304 ; 404) se trouve dans la zone d'un tablier d'auvent (19 ; 119 ; 219 ; 319 ; 419) délimitant le compartiment à capote (5 ; 105 ; 205 ; 305 ; 405) par rapport au siège arrière et cette fixation peut monter et descendre verticalement.

13. Véhicule automobile selon l'une des revendications 1 à 12,
**caractérisé en ce que**
les parties de châssis (403) comportent (452) au moins deux segments (450 ; 451) coulissant horizontalement l'un par rapport à l'autre ainsi qu'une autre partie susceptible de basculer verticalement et qui est fixée au segment horizontal arrière, cette autre partie pouvant coulisser dans la partie de cadre avant (451) pour la position de rangement de bagages.
